# EUROPEAN PATENT APPLICATION

(11) **EP 1 800 795 A2**
(43) Date of publication of application: **27.06.2007**
(21) Application number: 06026137.7
(22) Date of filing: 18.12.2006
(51) Int. Cl.: B23Q 7/04

(54) **Workpiece unloader device including a spline shaft**

(30) Priority: 22.12.2005 KR 20050128131
(71) Applicant: Doosan Infracore Co., Ltd., Dong-gu Incheon 401-020 (KR)
(72) Inventor: Lee, Sang Min, Gimhae-si Gyeonsangnam-do 621-833 (KR)
(74) Representative: Felder, Peter

(57) **Abstract**

Disclosed therein is a part unloader device including a spline shaft, which can minimize a vibration and lengthen a lifespan by applying a spline shaft as a driving shaft of an arm. The part unloader device, which can grip finished workpieces in a grip position of a processing machine and discharge them in a discharge position outside a processing area, includes: grip means for gripping and discharging workpieces; a spline shaft (30) connected at one end thereof to the grip means and rotated and moved integrally with the grip means; conveying means (10) connected to the spline shaft (30) for conveying the spline shaft (30) in an axial direction; a fixed block (20) fit fixedly onto the spline shaft (30); a spline bracket (50) fit onto the spline shaft (30) to be rotated integrally with the spline shaft (30), the spline bracket (50) being adapted to freely perform an axial relative movement with respect to the spline shaft (30); and rotating means connected at one end thereof to the fixed block (20) and connected at the other end thereof to the spline bracket (50) to relatively rotate the spline bracket (50) with respect to the fixed block (20).

## Description

### CROSS-REFERENCE TO RELATED APPLICATION

This application claims priority of Korean Patent Application Number 10-2005-128131, filed on December 22, 2005, which is incorporated by reference.

### BACKGROUND OF THE INVENTION

### Field of the Invention

The present invention relates to a part unloader device for discharging finished workpieces processed on a machine tool or a CNC lathe, and more particularly, to a part unloader device including a spline shaft, which applies a spline shaft as a driving shaft of an arm to thereby minimize a vibration and lengthen a lifespan.

### Background Art

In general, automated machine tools can finish a great deal of workpieces per day since most of them have a process completion time period of five minutes or so. A rapid discharge of finished workpieces is an important factor directly connected with the yield of the entire production. Therefore, most of automated machine tools are provided with an automated part unloader device for rapidly discharging finished products. Since the use of the part unloader device allows for a continuous production of the same products, the automated machine tool can product lots of products within a short period of time.

As an example of a prior art relating to such a part unloader device, there is disclosed Japanese Patent Laid-Open Publication No. 2003-117759 which is directed to a part unloader device having an independent structure for performing a rectilinear reciprocating motion by a guide member and rotating an arm by an arm stand. So, such a prior art has a problem in that it is complicated in structure and may cause a vibration.

In addition, Japanese Patent Laid-Open Publication No. 2000-254833 discloses a part unloader device having a structure for preventing a vibration when a driving direction of an arm is reversed. However, the prior art has a problem in that it is complicated in structure since the arm is actuated by a piston device.

Moreover, Japanese Patent Laid-Open Publication No. 2000-153425 discloses a part unloader device having a structure which moves an arm toward a ball screw driver for expanding and contracting the arm. However, the prior art has a problem in that ends of the arm are susceptible to weakness in vibration when the arm is expanded or contracted.

Japanese Patent Laid-Open Publication No. 2000-126972 discloses a part unloader device having a reciprocatingly conveying structure of an arm by a cylinder and an opening structure of a bucket operated in cooperation with the reciprocatingly conveying structure. However, the prior art has a problem in that it does not have an arm rotating structure and needs an additional complicated structure for allowing the bucket to be opened in cooperation with the reciprocatingly conveying motion.

Furthermore, Japanese Patent Laid-Open Publication No. 2003-220535 discloses a part unloader device, which has a frame structure of a rectangular coordinate system and a linear guide for a rectilinear reciprocating motion. However, the prior art has a problem in that it needs a large space and must be mounted on the outer surface of a machine tool.

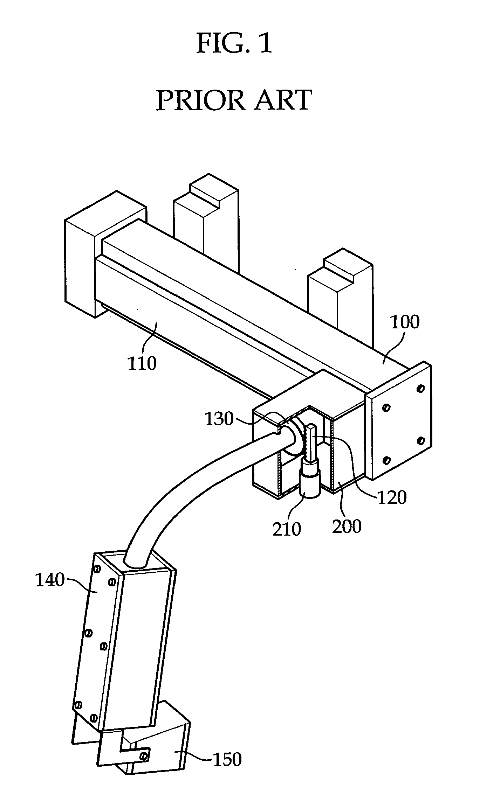

That is, the conventional part unloader devices are complicated in structure and restricted by an operational range and an installation location of the arm. To solve the above problems, a part unloader device of another type has been proposed. A conventional part unloader device shown in FIG. 1 includes a loadless cylinder 100 to which a linear motion guide 110 is attached, and a fixing part 200 laterally conveyed along the linear motion guide 110 when the loadless cylinder 100 is moved laterally. Additionally, the fixing part 200 has a pneumatic cylinder 210 mounted therein to vertically convey a rack 120 operated in cooperation with the pneumatic cylinder 210 and rotate a pinion 130 geared with the rack 120. When the pinion 30 is rotated, an arm 140 cooperating with a central shaft of the pinion 130 is rotated, whereby finished workpieces can be discharged through a bucket 150 mounted on the lower end of the arm 140.

However, the conventional part unloader device is complicated in structure, difficult to be assembled and expensive since the fixing part 200 performs a straight movement along the linear motion guide 110 while the loadless cylinder 100 is conveyed laterally. In addition, the conventional part unloader device may cause a vibration due to repulsive power generated when a movement direction of the rack 120 and the pinion 130, which are rotating motion devices, and a movement direction of the loadless cylinder 100 cross each other. Therefore, the part unloader device may cause minute troubles and malfunction due to the level of fatigue accumulated by the vibration in terms of characteristics of automated machines repeatedly used for a long time. Furthermore, the conventional part unloader device has another problem in that the yield of the entire production of products is reduced since the operation of the automated machine is stopped due to a frequent repair.

### SUMMARY OF THE INVENTION

Accordingly, the present invention has been made to solve the above-mentioned problems occurring in the prior arts, and it is an object of the present invention to provide a part unloader device including a spline shaft, which can reduce minute troubles and increase the yield of the entire production of products by minimizing a vibration generated by a rotating motion of an arm.

To accomplish the above objects, according to the present invention, there is provided a part unloader device which grips finished workpieces in a grip position of a processing machine and discharge the finished workpieces in a discharge position outside a processing area, comprising: grip means for gripping and discharging workpieces; a spline shaft connected at one end thereof to the grip means and adapted to be rotated and moved integrally with the grip means; conveying means connected to the other end of the spline shaft for conveying the spline shaft in an axial direction; a fixed block fit fixedly onto the spline shaft; a spline bracket fit onto the spline shaft to be rotated integrally with the spline shaft, the spline bracket being adapted to freely perform an axial relative movement with respect to the spline shaft; and rotating means connected at one end thereof to the fixed block and connected at the other end thereof to the spline bracket to relatively rotate the spline bracket with respect to the fixed block.

Moreover, the grip means includes: an arm fixed at one end thereof to one end of the spline shaft to rotate and move integrally with the spline shaft; and a bucket mounted on the other end of the arm for gripping and discharging the workpieces.

Furthermore, the conveying means is any one of a pneumatic cylinder, a hydraulic cylinder, a loadless cylinder and a linear motor.

In addition, the part unloader device further comprises a conveying block mounted between the other end of the spline shaft and the conveying means. The conveying block includes: a connection plate connected at one end thereof to the conveying means; and a journal fixing plate connected at one end thereof to the other end of the connection plate and connected at the other end thereof to the other end of the spline shaft.

Additionally, the part unloader device further comprises a shaft journal mounted between the other end of the spline shaft and the journal fixing plate and fit on the journal fixing plate for winding and inserting the other end of the spline shaft thereto. The conveying means 10 and the fixed block 20 are fixed integrally with each other. A bearing is mounted between the fixed block and the spline shaft and has an inner ring fixed to the spline bracket.

Moreover, the bearing has a sealing function for preventing penetration of foreign substances from the outside. The spline shaft has two to four pairs of semicircular grooves formed on an axial section thereof, and each pair of the semicircular grooves is located at equal angles.

Furthermore, the rotating means is a pressure-type cylinder, which is hingedly-connected at one end thereof to the fixed block and is hingedly-connected at the other end thereof to the spline bracket, and the pressure-type cylinder is a hydraulic cylinder or a pneumatic cylinder. The spline shaft has a plurality of semicircular grooves depressedly formed on an axial section thereof, the inner ring of the bearing has a plurality of inner ring grooves depressedly formed on an area corresponding to the semicircular grooves, and a plurality of shaft balls are respectively located between the semicircular grooves of the spline shaft and the inner ring grooves. In this instance, the semicircular grooves of the spline shaft are formed of two to four pairs, and each pair of the semicircular grooves is located at equal angles.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a perspective view of a part unloader device according to a prior art;
FIG. 2a is a perspective view of a part unloader device including a spline shaft according to a preferred embodiment of the present invention;
FIG. 2b is an exploded perspective view of the part unloader device of FIG. 2a;
FIG. 3 is a partially enlarged side view showing a route in which the spline shaft is axially conveyed;
FIG. 4a is an axially sectional view showing a combined structure of the spline shaft and a bearing of the part unloader device according to the present invention;
FIG. 4b is a sectional view taken along the line of A-A of FIG. 4a;
FIG. 5 is a left side view of the spline shaft of the part unloader device according to the present invention;
FIG. 6 is a view showing an expanded state of a cylinder of the part unloader device including the spline shaft according to the present invention;
FIG. 7 is a view showing a contracted state of the cylinder of FIG. 6; and
FIG. 8 is a perspective view showing a lateral conveyance of the part unloader device including the spline shaft according to the present invention.

### DETAILED DESCRIPTION OF THE PREFERRED EMBODIMENT

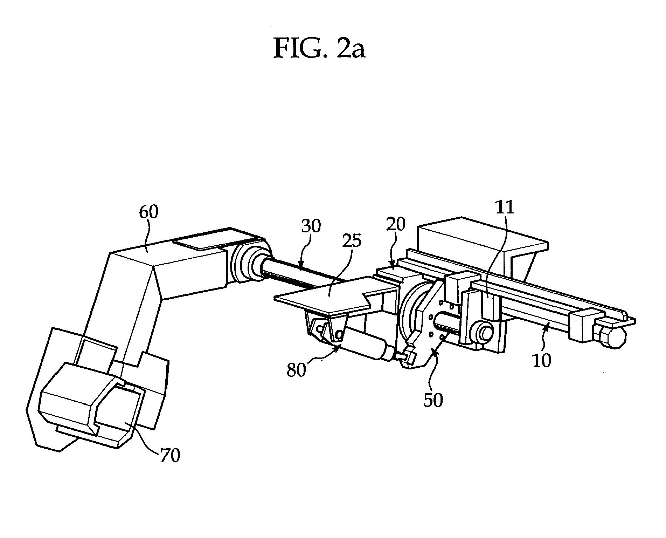

Reference will be now made in detail to the preferred embodiment of the present invention with reference to the attached drawings. FIG. 2a is a perspective view of a part unloader device including a spline shaft according to a preferred embodiment of the present invention. As shown in FIG. 2a, the part unloader device according to the present invention is installed on a machine tool. For this, a loadless cylinder 10 is fixed on the body of the machine tool. The loadless cylinder 10 performs a rectilinear reciprocating motion, and has a conveying block 11 mounted on a movable portion thereof. The conveying block 11 is connected with an end of the spline shaft 30. Therefore, the loadless cylinder 10, the conveying block 11 and the spline shaft 30 integrally perform the rectilinear reciprocating motion.

A fixed block 20 is fixed on the body of the machine tool together with the loadless cylinder 10. The spline shaft 30 penetrates a central area of the fixed block 20. The spline shaft 30 freely performs a rotation and an axial movement with respect to the fixed block 20.

The spline shaft 30 penetrates a central area of a spline bracket 50, and the spline bracket 50 is located beside the fixed block 20. The spline shaft 30 freely performs a rotation and an axial movement with respect to the spline bracket 50. A cylinder 80 is connected to the spline bracket 50. The spline bracket 50 is fixed on an inner ring 92 of a bearing 90 and rotated integrally with the bearing 90.

The cylinder 80 is a pneumatic cylinder or a hydraulic cylinder, and is hingedly-connected at one end thereof to the spline bracket 50 and hingedly-connected at the other end thereof to a cylinder bracket 25 of the fixed block 20. Since the cylinder bracket 25 is fixed integrally with the fixed block 20, expansion and contraction motions of the cylinder 80 lead to a rotating motion of the spline bracket 50.

The spline shaft 30 has a section, which is axially uniform, and includes an end connected to an arm 60 and the other end connected to the conveying block 11. A bucket 70 is mounted on a free end of the arm 60 to grip finished workpieces.

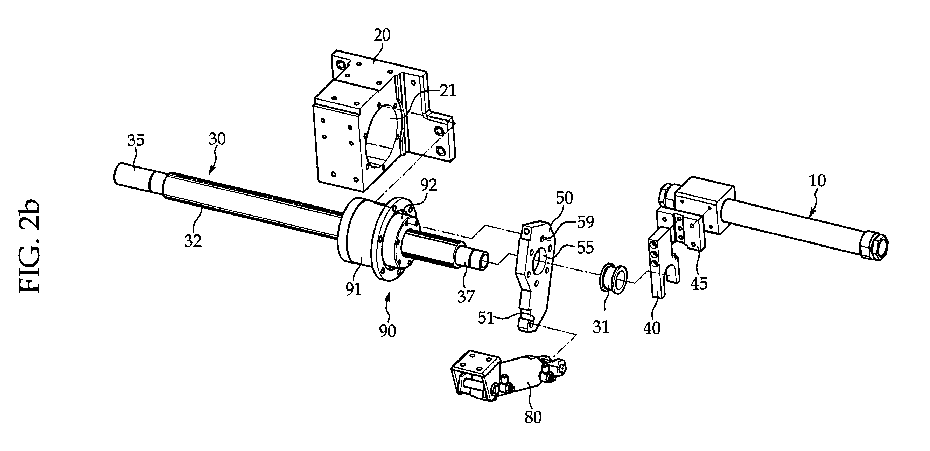

FIG. 2b is an exploded perspective view of the part unloader device of FIG. 2a. As shown in FIG. 2b, the bearing 90, which has the inner ring 92 and an outer ring 91, is fit onto the spline shaft 30 and fit and fixed in a bearing hole 21 of the fixed block 20. That is, the outer ring 91 is firmly fixed on the fixed block 20 and supports a rotation of the inner ring 92. The spline shaft 30 is fit in the inner ring 92. That is, the inner ring 92 and the spline shaft 30 are rotated integrally in a rotational direction and perform a relative rectilinear motion in an axial direction.

A bracket hole 55 is formed on the central area of the spline bracket 50, and the spline shaft 30 is fit in the bracket hole 55. Six screw holes 59 are formed around the bracket hole 55. The inner ring 92 and the spline bracket 50 can be rotated integrally with each other by inserting and coupling screws into the screw holes 59. A cylinder hole 51 is formed on an end portion of the spline bracket 50, and the cylinder 80 is hingedly connected to the cylinder hole 51.

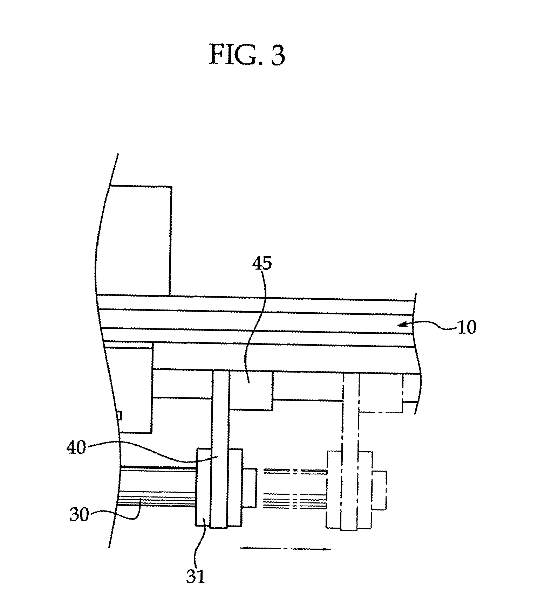

A shaft journal 31 is connected to the other end 37 of the spline shaft 30. The shaft journal 31 is fit fixedly onto a journal fixing plate 40, and the journal fixing plate 40 is connected with the loadless cylinder 10 through a connection plate 45. FIG. 3 is a partially enlarged side view showing a route in which the spline shaft 30 is axially conveyed. As shown in FIG. 3, when the loadless cylinder 10 performs the rectilinear reciprocating motion in an arrow direction, power is transmitted to the connection plate 45, the journal fixing plate 40, the shaft journal 30 and the spline shaft 30 in order, and so, they perform the rectilinear reciprocating motion integrally with one another.

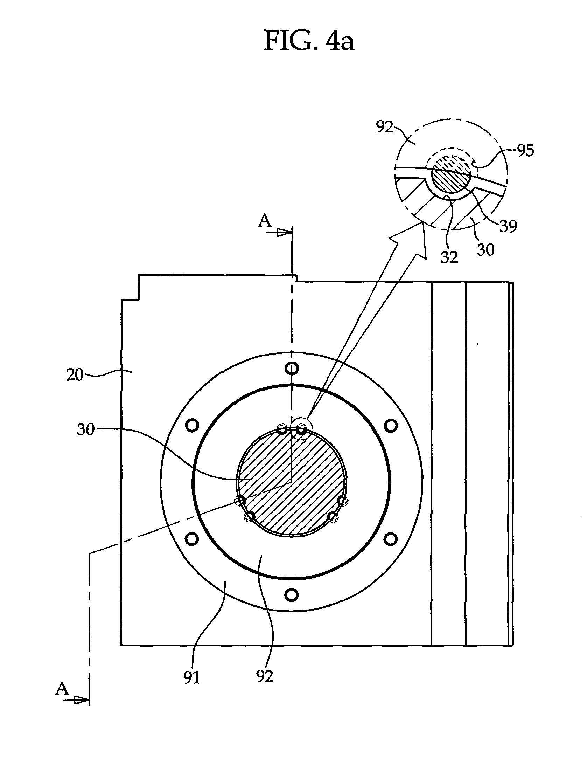

FIG. 4a is an axially sectional view showing a combined structure of the spline shaft and the bearing of the part unloader device according to the present invention. As shown in FIG. 4a, three pairs of semicircular grooves 32 are formed on an axial section of the spline shaft 30. The semicircular grooves 32 are uniformly depressed on the outer peripheral surface of the spline shaft 30 in the axial direction. Two adjacent semicircular grooves 32 form a pair, and each pair of the semicircular grooves 32 is located at angular intervals of 120°. If many semicircular grooves 32 are formed, it provides a merit to increase an operational torque of the rotational direction but provides a demerit to increase manufacturing costs and deteriorate strength of the spline shaft 30.

The outer ring 91 of the bearing 90 is fixed on the fixed block 20 and supports the rotation of the inner ring 92. The inner ring 92 has hemispherically-shaped inner ring grooves 95 depressedly formed on the inner peripheral surface thereof. A shaft ball 39 is fit between each semicircular groove 32 of the spline shaft 30 and each inner ring groove 95. So, when the spline shaft 30 is rotated, the spline shaft 30 and the inner ring 92 are rotated integrally with each other by the shaft balls 39. Furthermore, when the spline shaft 30 axially performs the rectilinear reciprocating motion, since the shaft ball 39 rolls along the semicircular groove 32, the spline shaft 30 performs the relative rectilinear motion with respect to the inner ring 92.

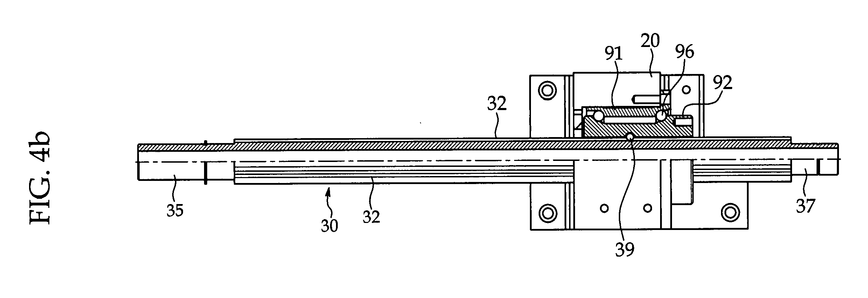

FIG. 4b is a sectional view taken along the line of A-A of FIG. 4a. As shown in FIG. 4b, the semicircular groove 32 is elongatedly formed on the outer peripheral surface of the spline shaft 30 in the axial direction. Balls 96 are formed between the inner ring 92 and the outer ring 91 of the bearing 90 in two rows. The bearing 90, which has the balls 96 of the two rows, can remove a backlash of the spline shaft 30. Particularly, the bearing 90, which has a sealing function, can prevent penetration of foreign substances (for instance, chips or cutting oil) from the outside. In FIG. 4b, the arm 60 is coupled to an end 35 of the spline shaft 30, and the shaft journal 31 is fixed to the other end 37 of the spline shaft 30.

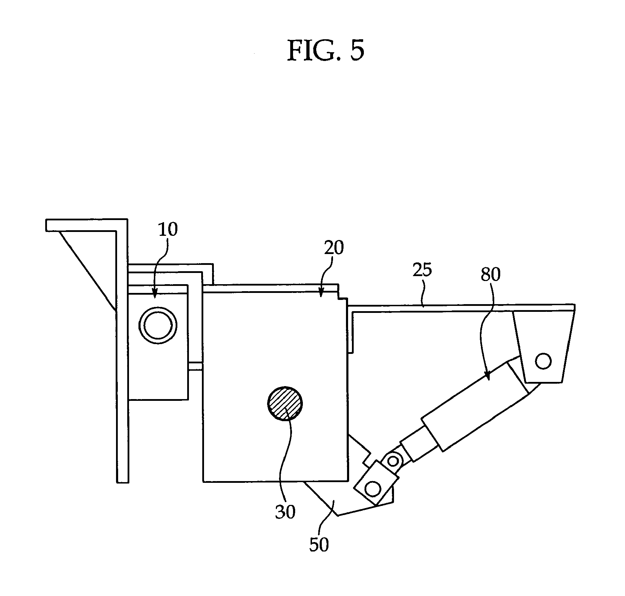

FIG. 5 is a left side view of the spline shaft of the part unloader device. In FIG. 5, the arm 60 is omitted to schematically view the spline shaft. As shown in FIG. 5, the spline shaft 30 is fit onto the fixed block 20, the spline bracket 50 is rotated according to the expansion and contraction of the cylinder 80, and so, the spline shaft 30 is also rotated. In FIG. 5, the loadless cylinder 10 and the fixed block 20 are fixed on the machine tool (not shown, left side in FIG. 5).

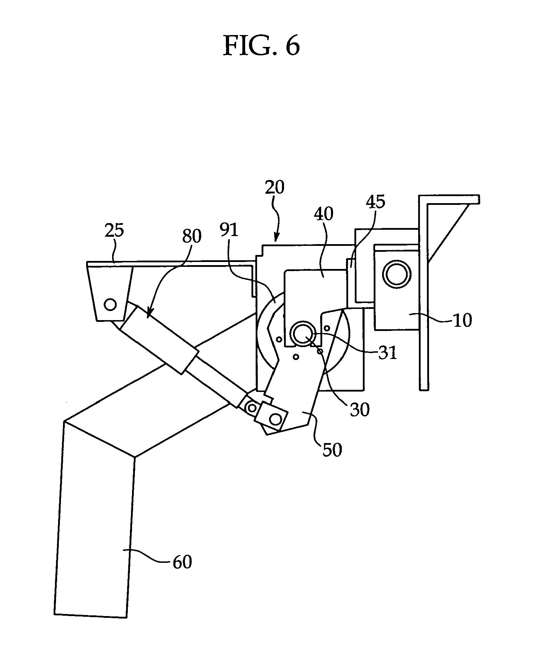

Hereinafter, the operation of the part unloader device having the above configuration will be described. FIG. 6 is a view showing an expanded state of a cylinder of the part unloader device including the spline shaft according to the present invention. As shown in FIG. 6, since the cylinder 80 is fixed on the cylinder bracket 25, the spline bracket 50 is pushed according to the expansion of the cylinder 80. So, the spline bracket 50 is rotated, and then, the inner ring 92 screw-coupled with the spline bracket 50 is rotated integrally with the spline bracket 50. In this instance, as shown in FIG. 4a, the rotation of the inner ring 92 leads to the rotation of the spline shaft 30 by the shaft ball 39. Therefore, the spline bracket 50, the inner ring 92 and the spline shaft 30 are rotated integrally with one another. Finally, the rotation of the spline shaft 30 leads to the rotation of the arm 60, so that the bucket 70 approaches and grips the workpieces. Such a rotating motion is supported by the bearing 90. A configuration and the grasping action of the bucket 70 will not be described in detail since they can be easily achieved by those skilled in this field.

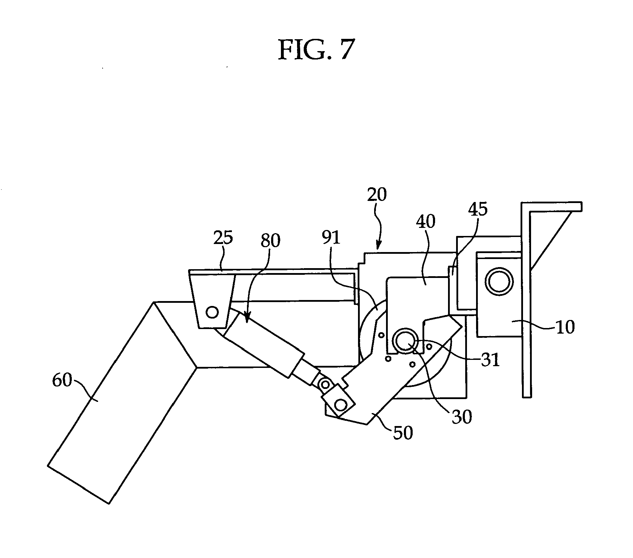

FIG. 7 is a view showing a contracted state of the cylinder of FIG. 6. The spline bracket 50 is reversely rotated according to contraction of the cylinder 80, and so, the inner ring 92, the spline shaft 30 and the arm 60 are also reversely rotated. The reversely rotating motion allows the bucket 70 to discharge the gripped workpieces to the outside. The configuration and the discharging action of the bucket 70 will not be described in detail since they can be easily achieved by those skilled in this field. As described above, the workpieces are gripped and discharged to the outside from the machine tool through the repeated expansion and contraction actions of the cylinder 80.

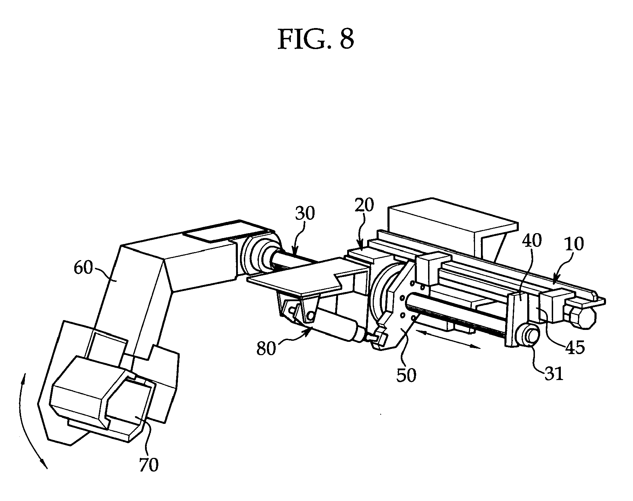

FIG. 8 is a perspective view showing a lateral conveyance of the part unloader device including the spline shaft according to the present invention. As shown in FIG. 8, the connection plate 45, the journal fixing plate 40 and the shaft journal 31 perform a lateral movement integrally with one another according to a lateral movement of the loadless cylinder 10 (in a straight arrow direction in FIG. 8). In this instance, since the end 37 of the spline shaft 30 is fit in the shaft journal 31, the spline shaft 30, the arm 60 and the bucket 70 perform the lateral movement integrally with one another. As shown in FIG. 4b, the shaft balls 39 roll inside the semicircular grooves 32 according to the straight motion of the spline shaft 30. Since the shaft balls 39 rotates inside the inner ring grooves 95, the spline shaft 30 can freely perform the relative rectilinear motion with respect to the inner ring 92. The shaft balls 39 can minimize a contact friction force. In FIG. 4b, the shaft balls 39 are arranged in a row in a circumferential direction, but if the shaft balls 39 are arranged in two rows or more, it may remove the backlash and guide a more stable straight motion.

The spline shaft described in the present invention has the semicircular grooves, but it would be appreciated that uniform teeth may be formed on the circumference of the spline shaft.

As described above, the part unloader device including the spline shaft according to the present invention can reduce a vibration generated during continuous operations for a long time, and reduce maintenance expenses by reducing malfunction and troubles of the machine. In addition, the part unloader device including the spline shaft according to the present invention is easy to assemble since its structure is simple and can be operated for a long time due to its higher stability and increase production of products.

While the present invention has been described with reference to the particular illustrative embodiment, it is not to be restricted by the embodiment but only by the appended claims. It is to be appreciated that those skilled in the art can change or modify the embodiment without departing from the scope and spirit of the present invention.

## Claims

1. A part unloader device which grips finished workpieces in a grip position of a processing machine and discharge the finished workpieces in a discharge position outside a processing area, the part unloader device comprising:
grip means for gripping and discharging workpieces;
a spline shaft connected at one end thereof to the grip means and adapted to be rotated and moved integrally with the grip means;
conveying means connected to the other end of the spline shaft for conveying the spline shaft in an axial direction;
a fixed block fit fixedly onto the spline shaft;
a spline bracket fit onto the spline shaft to be rotated integrally with the spline shaft, the spline bracket being adapted to freely perform an axial relative movement with respect to the spline shaft; and
rotating means connected at one end thereof to the fixed block and connected at the other end thereof to the spline bracket to relatively rotate the spline bracket with respect to the fixed block.

2. The part unloader device according to claim 1, wherein the grip means includes:
an arm fixed at one end thereof to one end of the spline shaft to rotate and move integrally with the spline shaft; and
a bucket mounted on the other end of the arm for gripping and discharging the workpieces.

3. The part unloader device according to claim 1, wherein the conveying means is any one of a pneumatic cylinder, a hydraulic cylinder, a loadless cylinder and a linear motor.

4. The part unloader device according to claim 1, further comprising a conveying block mounted between the other end of the spline shaft and the conveying means.

5. The part unloader device according to claim 4, wherein the conveying block includes:
a connection plate connected at one end thereof to the conveying means; and
a journal fixing plate connected at one end thereof to the other end of the connection plate and connected at the other end thereof to the other end of the spline shaft.

6. The part unloader device according to claim 5, further comprising a shaft journal mounted between the other end of the spline shaft and the journal fixing plate and fit on the journal fixing plate for winding and inserting the other end of the spline shaft thereto.

7. The part unloader device according to claim 1, wherein the conveying means and the fixed block are fixed integrally with each other.

8. The part unloader device according to claim 1, further comprising a bearing mounted between the fixed block and the spline shaft, the bearing having an inner ring fixed to the spline bracket.

9. The part unloader device according to claim 6, wherein the bearing has a sealing function for preventing penetration of foreign substances from the outside.

10. The part unloader device according to claim 1, wherein the spline shaft has two to four pairs of semicircular grooves formed on an axial section thereof, and each pair of the semicircular grooves is located at equal angles.

11. The part unloader device according to claim 1, wherein the rotating means is a pressure-type cylinder, which is hingedly-connected at one end thereof to the fixed block and is hingedly-connected at the other end thereof to the spline bracket.

12. The part unloader device according to claim 9, wherein the pressure-type cylinder is a hydraulic cylinder or a pneumatic cylinder.

13. The part unloader device according to claim 8, wherein the spline shaft has a plurality of semicircular grooves depressedly formed on an axial section thereof,
wherein the inner ring of the bearing has a plurality of inner ring grooves depressedly formed on an area corresponding to the semicircular grooves, and
wherein a plurality of shaft balls are respectively located between the semicircular grooves of the spline shaft and the inner ring grooves.

14. The part unloader device according to claim 13, wherein the semicircular grooves of the spline shaft are formed of two to four pairs, and each pair of the semicircular grooves is located at equal angles.
